# EUROPÄISCHE PATENTANMELDUNG

(11) **EP 2 458 295 A1**
(43) Veröffentlichungstag der Anmeldung: **30.05.2012**
(21) Anmeldenummer: 10193151.7
(22) Anmeldetag: 30.11.2010
(51) Int. Cl.: F24F 13/02, B32B 3/02, B32B 17/00, F16L 9/17, E05D 1/00

(54) **Zusammenleg- und/oder aufrollbares Leitungsbauteil mit Längskehlen entlang der Biegekanten**

(71) Anmelder: Centrotherm Systemtechnik GmbH, 59929 Brilon (DE)
(72) Erfinder: Liese, Ralf, 59909 Bestwig- OT Ostwig (DE)
(74) Vertreter: Zenz

(57) **Zusammenfassung**

Bei einem Leitungsbauteil (1), das plattenförmig ausgebildet ist und eine Schicht (2) aus einem verdichteten, wärmeisolierenden sowie feuerbeständigen Fasermaterial aufweist, auf deren Innenseite (3) eine fluidundurchlässige Dichtschicht (4) aufgebracht ist, wobei eine Biegung des Leitungsbauteils (1) ermöglichende Längsauskehlungen (7) in der Schicht (2) aus Fasermaterial ausgeformt sind, die das Leitungsbauteil (1) in Seitenwandabschnitte (8) unterteilen und jeweilige Eckenabschnitte (9) definieren, und wobei das Leitungsbauteil (1) zum Transport in raumsparender Weise zusammenlegbar und/oder aufrollbar ist, soll eine Lösung geschaffen werden, durch die auf konstruktiv einfache Weise und kostengünstig ein verbessertes und insbesondere ein selbsttragendes Leitungsbauteil bereitgestellt wird. Dies wird dadurch erreicht, dass die Längsauskehlungen (7) auf der Innenseite (3) der Schicht (2) aus Fasermaterial ausgebildet sind und dass die Schicht (2) aus Fasermaterial auf ihrer Außenseite (5) zu den jeweiligen Längsauskehlungen (7) korrespondierend angeordnete und nach außen ballig ausgebildete Längswölbungen (11) aufweist, die Teil der jeweiligen Eckenabschnitte (9) sind.

## Beschreibung

Die Erfindung richtet sich auf ein Leitungsbauteil, das plattenförmig ausgebildet ist und eine Schicht aus einem verdichteten, wärmeisolierenden sowie feuerbeständigen Fasermaterial aufweist, auf deren Innenseite eine fluidundurchlässige Dichtschicht aufgebracht ist, wobei eine Biegung des Leitungsbauteils ermöglichende Längsauskehlungen in der Schicht aus Fasermaterial ausgeformt sind, die das Leitungsbauteil in Seitenwandabschnitte unterteilen und jeweilige Eckenabschnitte definieren, und wobei das Leitungsbauteil zum Transport in raumsparender Weise zusammenlegbar und/oder aufrollbar ist.

Ein Leitungsbauteil der eingangs genannten Art kann beispielsweise als Fluidleitungskanal in Leitungssystemen einer Wärmerückgewinnungs-, Heizungs-, Lüftungs- oder Klimaanlage eingesetzt werden und ist zum Beispiel in der WO 2009/145698 A1 beschrieben. Das plattenförmig ausgebildete Leitungsbauteil umfasst eine Schicht aus einem Fasermaterial und wenigstens eine fluidundurchlässige Schicht. Zur Herstellung eines Fluidleitungskanals und somit zur Herstellung einer in sich geschlossenen Mantelfläche wird das Leitungsbauteil gebogen und an seinen Längskanten zusammengefügt. Zum Biegen des Leitungsbauteils sind daher in dem Fasermaterial Biegelinien vorgesehen. Die Biegelinien definieren Eckenabschnitte und unterteilen das Leitungsbauteil in Seitenwandabschnitte. Darüber hinaus ermöglichen die Biegelinien ein Zusammenlegen des Leitungsbauteils zu dessen Transport. Damit das Leitungsbauteil ferner aufrollbar ist, weisen die Seitenwandabschnitte abwechselnd weiche und starre Bereiche auf, die sich quer zur Längsrichtung des Leitungsbauteils erstrecken. Dabei sind die weichen und starren Bereiche der Seitenwandabschnitte sowie die Biegelinien in das Fasermaterial des Leitungsbauteils durch unterschiedlich starke Verpressung des Fasermaterials in dieses eingeprägt. Laut der WO 2009/145698 A1 müssen die Fasern im Bereich der Biegelinien entweder nachbehandelt oder gebrochen werden, um überhaupt eine Biegung des Leitungsbauteils in den Eckenabschnitten zu ermöglichen.

Nachteilig bei diesem bekannten Stand der Technik ist, dass aufgrund der starken Verpressung bzw. Verdichtung und infolge des Brechens der Fasern im Bereich der Eckenabschnitte die Festigkeit und Dehnfähigkeit der Schicht aus Fasermaterial abnimmt. Insbesondere das Brechen der Fasern führt im Bereich der Eckenabschnitte zu einer ungleichmäßigen Wärmeleitung, wodurch Kältebrücken entstehen. Darüber hinaus ist aber auch keine weitere Materialverdrängung möglich, ohne die Fasern weiter zu brechen. Beim Zusammenlegen und Aufrollen dieses bekannten Leitungsbauteils entstehen ferner in den Eckenabschnitten hohe Zugspannungen, die zu einer weiteren Verdichtung des Fasermaterials führen. Aufgrund der in diesem Bereich kurzfaserig gebrochenen Fasern liefern die Eckenabschnitte keinen Beitrag mehr zur mechanischen Stabilität des errichteten Fluidleitungskanals, so dass insgesamt die Stabilität eines von dem Leitungsbauteil gebildeten Fluidleitungskanals abnimmt. Infolge dieser mechanischen Instabilität kann der von dem Leitungsbauteil gebildete Fluidleitungskanal bereits bei geringen Unterdrücken in sich zusammenfallen bzw. kollabieren, was insbesondere daran liegt, dass die Eckenabschnitte nicht zur Formstabilität des Fluidleitungskanals beitragen.

Der Erfindung liegt daher die Aufgabe zugrunde eine Lösung zu schaffen, die auf konstruktiv einfache Weise und kostengünstig ein verbessertes und insbesondere ein selbsttragendes Leitungsbauteil bereitstellt, und die darüber hinaus die bei dem bekannten Stand der Technik vorhandenen Probleme löst.

Bei einem Leitungsbauteil der eingangs bezeichneten Art wird diese Aufgabe erfindungsgemäß dadurch gelöst, dass die Längsauskehlungen auf der Innenseite der Schicht aus Fasermaterial ausgebildet sind und das die Schicht aus Fasermaterial auf ihrer Außenseite zu den jeweiligen Längsauskehlungen korrespondierend angeordnete und nach außen ballig ausgebildete Längswölbungen aufweist, die Teil der jeweiligen Eckenabschnitte sind.

Durch die Erfindung wird eine Möglichkeit bereitgestellt, mit welcher auf konstruktiv einfache Weise ein verbessertes Leitungsbauteil für ein Leitungssystem, wie beispielsweise einer Wärmerückgewinnungs-, Heizungs-, Lüftungs- oder Klimaanlage, zur Verfügung steht. Dabei ist es vorteilhaft, wenn das Fasermaterial des Leitungsbauteils aus einer gepressten Mineralwolle, vorzugsweise Glaswolle oder Steinwolle, gebildet ist. Ein aus einem solchen Material gebildetes Leitungsbauteil ist bis über 100°C temperaturbeständig und demnach im Wesentlichen feuerbeständig. Als alternatives Material zu anorganischer Mineralwolle kann auch ein flammhemmend organisches Fasermaterial für die Schicht des Fasermaterials des Leitungsbauteils verwendet werden. Durch die in der Schicht aus gepresstem bzw. verpresstem Fasermaterial gebildeten Hohlräume weist das Leitungsbauteil zudem ein besonders gutes Wärmedämmvermögen. Dadurch kommen die vorteilhaften Eigenschaften dieses Materials für die Anwendung als Fluidleitungskanäle wie beispielsweise zur Gebäudebelüftung und -klimatisierung voll zur Geltung. Durch die gute Wärmedämmung wird die temperierte Luft in dem Leitungssystem weder in unerwünschter Weise erwärmt noch abgekühlt. Darüber hinaus gewährleistet das aus Mineralwolle oder organischem Fasermaterial bestehende Leitungsbauteil, dass das Leitungssystem insgesamt den Brandschutzbestimmungen genügt. Ein weiterer Vorteil dieses Materials ist, dass es gute schalldämmende Eigenschaften aufweist, so dass keine weiteren Maßnahmen zur Schalldämmung bei der Installation in Gebäuden erforderlich sind. Aufgrund der balligen Ausgestaltung der Eckenabschnitte weist die Schicht aus Fasermaterial in diesen Bereichen im Vergleich zu den Seitenwandabschnitten eine geringere Verdichtung auf und ist dadurch im Wesentlichen elastisch ausgebildet. Diese elastische Ausgestaltung der Eckenabschnitte bewirkt, dass sowohl beim Zusammenlegen des Leitungsbauteils als auch zur Herstellung eines Fluidleitungskanals mit einer in sich geschlossenen Mantelfläche die Fasern in den Eckenabschnitten nicht gebrochen, sondern lediglich gedehnt werden, so dass das Fasermaterial beim Zusammenlegen des Leitungsbauteils nicht beschädigt wird. Ferner liegen nach Herstellung des Fluidleitungskanals, was durch Biegung des Leitungsbauteils erfolgt, Abschnitte der Innenwand der innenseitig ausgebildeten Längsauskehlungen aneinander an, was wesentlich zur Erhöhung der mechanischen Stabilität des Fluidleitungskanals beiträgt.

In Ausgestaltung der Erfindung ist vorgesehen, dass die Breite einer jeweiligen Längsauskehlung kleiner ist als die Breite einer jeweiligen nach außen ballig ausgebildeten Längswölbung. Somit nehmen die Eckenabschnitte eine Art mondsichelförmige Ausgestaltung an, was einen sehr weichen und gering verdichteten bzw. verpressten Verlauf des Fasermaterials in den Eckenabschnitten ermöglicht. Dadurch sind starke Verformungen der Eckenabschnitte, beispielsweise bei Biegung des Leitungsbauteils, ohne eine Schädigung des Fasermaterials möglich.

Zusätzlich ist es im Hinblick auf eine faserschonende Biegung der Eckenabschnitte auch von Vorteil, wenn die Fasern der Schicht aus Fasermaterial in den Eckenabschnitten gleich stark oder geringer stark verdichtet bzw. verpresst sind als in den Seitenwandabschnitten.

Um die selbsttragenden Eigenschaften des Leitungsbauteils weiter zu erhöhen, ist in weiterer Ausgestaltung der Erfindung vorgesehen, dass zumindest Bereiche der Seitenwandabschnitte durch starke Verdichtung bzw. Verpressung der Fasern der Schicht aus Fasermaterial formstabil ausgebildet sind.

Die Form der Längswölbungen und Längsauskehlungen ist beliebig, wobei es sich als vorteilhaft erwiesen hat, wenn die Längsauskehlungen und die Längswölbungen jeweils im Querschnitt ellipsenförmig oder kreisbogenförmig ausgebildet sind. Die Querschnitte der Längswölbungen und der Längsauskehlungen können hierbei in ihrer Grundform identisch oder voneinander abweichend sein.

Um die elastischen Eigenschaften der Eckenabschnitte zu gewährleisten und eine Verdichtung des Fasermaterials bei Biegung zu vermeiden ist es dann von Vorteil, wenn der Radius einer im Querschnitt ellipsenförmig oder kreisbogenförmig ausgebildeten Längswölbung größer ist als der Radius einer im Querschnitt ellipsenförmig oder kreisbogenförmig ausgebildeten Längsauskehlung. Auch ist es in diesem Zusammenhang vorteilhaft, wenn der Radius einer im Querschnitt ellipsenförmig oder kreisbogenförmig ausgebildeten Längswölbung größer ist als die Breite eines Seitenwandabschnitts.

Die Erfindung sieht in weiterer Ausgestaltung vor, dass eine Schicht aus einem elastischen Vliesmaterial vorgesehen ist, die an der Außenseite des plattenförmig ausgebildeten Leitungsbauteils auf der Schicht aus Fasermaterial aufgebracht ist. Das außenseitig angebrachte Vliesmaterial ermöglicht je nach Dehnfähigkeit eine Rückstellung bzw. Formstabilität des in Form eines im Querschnitt polygonalen Fluidleitungskanals gebogenen Leistungsbauteils. Das außenseitig angebrachte Vliesmaterial kann optional eine wasserdampfdiffusionsdichte Folienschicht, beispielsweise aus einem thermoplastischen Kunststoff, aufweisen, wobei ferner das Vliesmaterial bzw. die Folienschicht mit Hilfe von beispielsweise Glas-, Keramik- oder Kunststofffasern verstärkt sein kann.

In Ausgestaltung der Erfindung ist dann ferner vorgesehen, dass im abgewickelten Zustand des Leitungsbauteils, d.h. in einem Zustand, bevor das Leitungsbauteil zur Bildung einer in sich geschlossenen Mantelfläche gebogen wird, die innenseitige Dichtschicht die Längsauskehlungen derart überdeckt, dass zwischen der Dichtschicht und den jeweiligen Längsauskehlungen jeweilige längsverlaufende Hohlräume gebildet sind. Diese Hohlräume bilden Aufnahmeräume, von denen Material des Leitungsbauteils bei Biegung aufgenommen werden kann.

In Weiterbildung der Erfindung ist dann vorgesehen, dass zur Herstellung einer in sich geschlossenen Mantelfläche das Leitungsbauteil mit seinen Längskanten aneinanderstoßend zu dem gewünschten polygonalen Mantelquerschnitt gebogen ist und die Längskanten zusammengefügt sind. Die Verbindung bzw. das Fügen der Längskanten kann beispielsweise durch An- und Einpressen oder Kleben erfolgen.

Um in strömungstechnischer Hinsicht Verluste oder Verwirbelungen der Strömung in den Randzonen des von dem Leitungsbauteil gebildeten Fluidleitungskanals möglichst gering zu halten oder sogar zu vermeiden, ist in weiterer Ausgestaltung der Erfindung vorgesehen, dass bei geschlossener Mantelfläche die Innenwand einer jeweiligen Längsauskehlung flächig an sich selbst anliegt und der die jeweilige Längsauskehlung überdeckende Abschnitt der fluidundurchlässigen Dichtschicht zwischen der an sich selbst anliegenden Innenwand angeordnet und eingeklemmt ist. Auf diese Weise wird eine definierte Innenkante des gebildeten Fluidleitungskanals bei geschlossener Mantelfläche erzielt. Darüber hinaus wird vermieden, dass das bei Biegung des Leitungsbauteils überschüssige Material der fluidundurchlässigen Schicht, was zusätzlich zu Strömungsverlusten beitragen könnte, innen im hergestellten Fluidleitungskanal angeordnet ist.

Um ferner ein Aufrollen des Leitungsbauteils in dessen Längsrichtung zu gewährleisten, ist es schließlich von Vorteil, wenn zumindest ein Seitenwandabschnitt der Schicht aus Fasermaterial außenseitig quer verlaufende, ballig ausgebildete und nach außen gewölbte Biegeabschnitte mit geringer Materialverdichtung aufweisen. Die ballig ausgebildeten Biegeabschnitte ähneln hierbei vom Prinzip und in ihrer Funktion her den ballig ausgebildeten Eckenabschnitten, wobei zweckmäßigerweise alle Seitenwandabschnitte ballig ausgebildete Biegeabschnitte aufweisen.

Es versteht sich, dass die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Der Rahmen der Erfindung ist nur durch die Ansprüche definiert.

Weitere Einzelheiten, Merkmale und Vorteile des Gegenstandes der Erfindung ergeben sich aus der nachfolgenden Beschreibung im Zusammenhang mit der Zeichnung, in der beispielhaft ein Ausführungsbeispiel der Erfindung dargestellt ist. In der Zeichnung zeigt:
Figur 1 ein erfindungsgemäßes Leitungsbauteil nach Herstellung einer in sich geschlossener Mantelfläche in Querschnittsansicht,
Figur 2 das Leitungsbauteil aus Figur 1 in perspektivischer Ansicht,
Figur 3 das Leitungsbauteil vor der Herstellung einer in sich geschlossenen Mantelfläche in Querschnittsansicht,
Figur 4 einen in Figur 3 gezeigten Ausschnitt des Leitungsbauteils,
Figur 5 den in Figur 4 gezeigten Ausschnitt des Leitungsbauteils in einem ersten Schritt zur Herstellung einer in sich geschlossenen Mantelfläche,
Figur 6 den in Figur 4 gezeigten Ausschnitt des Leitungsbauteils in einem zweiten Schritt zur Herstellung einer in sich geschlossenen Mantelfläche,
Figur 7 den in Figur 4 und einen in Figur 1 gezeigten Ausschnitt des Leitungsbauteils nach Herstellung einer in sich geschlossenen Mantelfläche,
Figur 8 das Leitungsbauteil im zusammengelegten Zustand in Querschnittsansicht,
Figur 9 das Leitungsbauteil mit in sich geschlossener Mantelfläche mit Seitenwandabschnitten gemäß einer alternativen Ausgestaltung,
Figur 10 das Leitungsbauteil aus Figur 9 in perspektivischer Ansicht und
Figur 11 einen Ausschnitt eines Seitenwandabschnitts gemäß der alternativen Ausgestaltung.

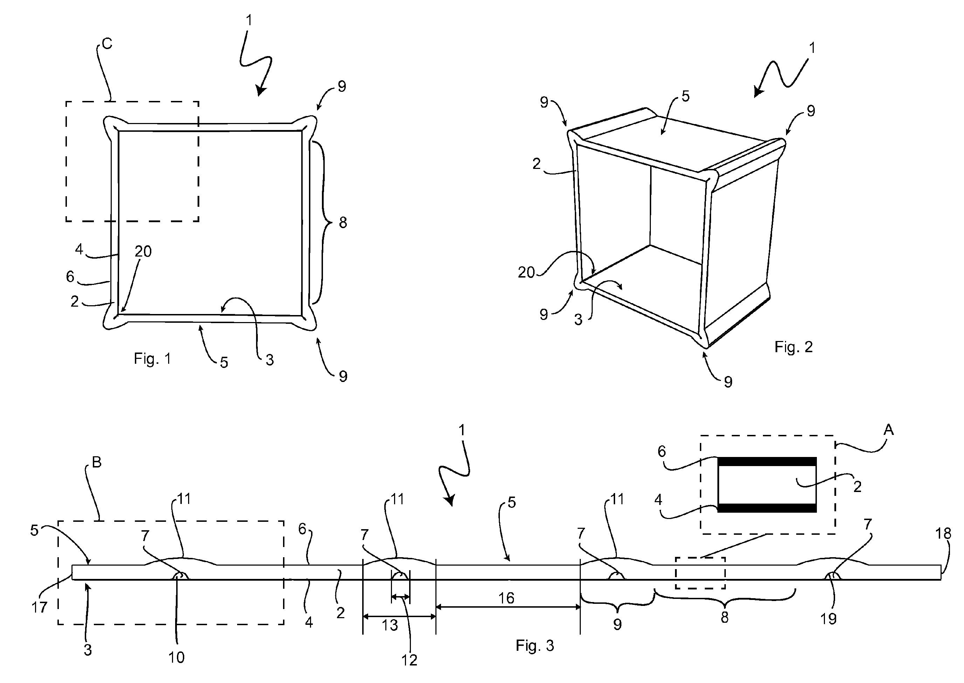

Nachstehend wird das erfindungsgemäße Leitungsbauteil 1 mit Bezug auf die Figuren beschrieben. Das in den Figuren 1 und 2 dargestellte Leitungsbauteil 1 dient als Fluidleitungskanal und weist nach Herstellung einer geschlossenen Mantelfläche eine im Querschnitt polygonale Form auf, die in dem gezeigten Ausführungsbeispiel einer viereckigen Gestalt entspricht. Der Ausdruck "Fluid" bezieht sich hierbei sowohl auf ein gasförmiges als auch auf ein dampfförmiges Medium, welches durch den Fluidleitungskanal geleitet werden soll. Es sei ferner angemerkt, dass das in Figur 2 in perspektivischer Ansicht dargestellte Leitungsbauteil 1 lediglich exemplarisch einen kurzen Abschnitt zeigt, denn das Leitungsbauteil 1 weist üblicherweise eine Länge von etwa drei oder mehr Metern auf. Vor der Herstellung der geschlossenen Mantelfläche weist das Leitungsbauteil 1 die Form einer länglichen Platte auf, die in einer Querschnittsansicht in Figur 3 dargestellt ist.

Das plattenförmig ausgebildete Leitungsbauteil 1 ist schichtartig aufgebaut, wie dem vergrößerten Ausschnitt A in Figur 3 zu entnehmen ist, und umfasst eine mittlere Schicht 2 aus einem Fasermaterial. Die Schicht 2 aus Fasermaterial ist aus verdichteter Mineralwolle, wie beispielsweise Glaswolle oder Steinwolle, gebildet und weist wärmeisolierende sowie feuerbeständige Eigenschaften auf. Alternativ zu anorganischer Mineralwolle kann auch ein organisches Fasermaterial oder organisches Halbzeug für die Schicht 2 verwendet werden. Für die Erfindung wird ausgenutzt, dass aus diesem im Rohzustand mechanisch instabilen Fasermaterial durch Verpressen formstabile, eigensteife Formteile erzeugt werden können. Auf der die Innenseite 3 des Leitungsbauteils 1 darstellenden Seitenfläche ist auf der Schicht 2 aus Fasermaterial eine fluidundurchlässige Dichtschicht 4 aufgebracht, die aus einem thermoplastischen Kunststoff, wie beispielsweise PET, bestehen kann.

Ferner ist auf der die Außenseite 5 des Leitungsteils 1 darstellenden Seitenfläche auf der Schicht 2 aus Fasermaterial eine Schicht bzw. Außenschicht 6 aus einem Vliesmaterial aufgebracht. Die Außenschicht 6 aus Vliesmaterial ist rein optional und somit entbehrlich. Allerdings kann das Vorsehen dieser Außenschicht 6 je nach Dehnfähigkeit des Vliesmaterials gewisse Vorteile hinsichtlich einer Rückstellwirkung und Stabilität des in Form eines polygonalen Fluidleitungskanals gebogenen Leistungsbauteils 1 mit sich bringen. Die Außenschicht kann optional aus einem wasserdampfdiffusionsdichten Material gebildet sein.

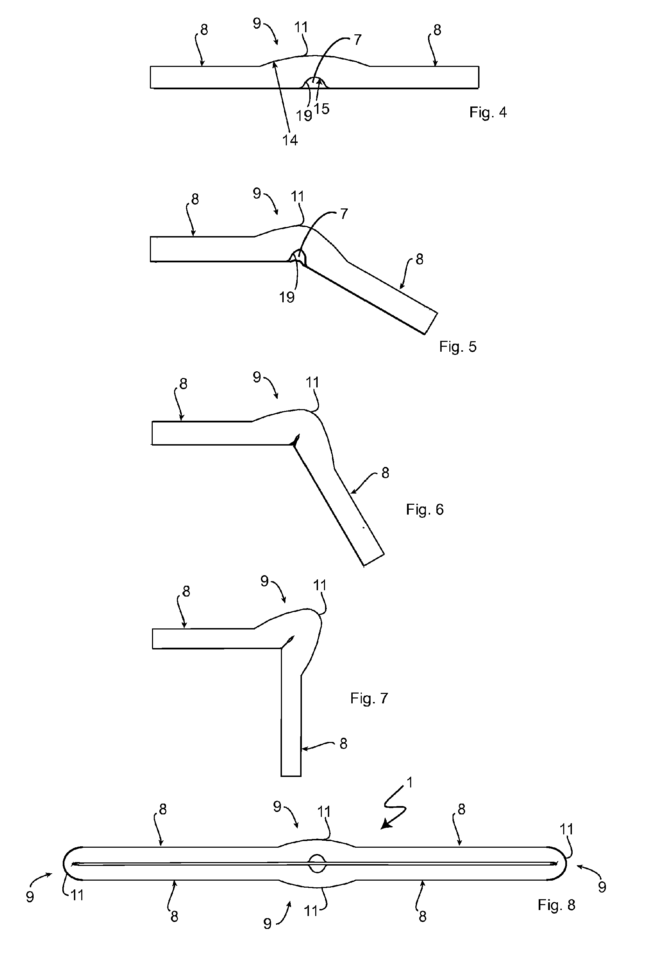

Zur Herstellung einer in sich geschlossenen Mantelfläche ist es erforderlich, dass sich das nicht-metallische Leitungsbauteil 1 leicht biegen lässt. Zu diesem Zweck weist die Schicht 2 aus Fasermaterial mehrere voneinander beabstandete Längsauskehlungen 7 auf, die eine Biegung des Leitungsbauteils 1 ermöglichen und die das Leitungsbauteil 1 bzw. die Schicht 2 aus Fasermaterial in mehrere Seitenwandabschnitte 8 unterteilen. Dabei gehören die Längsauskehlungen 7 zu einzelnen Eckenabschnitten 9 des Leitungsbauteils 1 und sind innenseitig bzw. in der Innenseite 3 ausgeformt. Wie aus den Figuren 3 und 4 ersichtlich ist, überdeckt die innenseitig angeordnete Dichtschicht 4 die in der Schicht 2 aus Fasermaterial ausgebildeten Längsauskehlungen 7, so dass zwischen der Dichtschicht 4 und einer jeweiligen Längsauskehlung 7 ein längs verlaufender Hohlraum 10 ausgebildet ist.

Ein jeweiliger Eckenabschnitt 9 umfasst neben einer jeweiligen Längsauskehlung 7 erfindungsgemäß eine Längswölbung 11, die ballig und auf der Außenseite 5 des Leitungsbauteils 1 bzw. außenseitig ausgebildet ist. Wie aus den Figuren 3 und 4 hervorgeht, ist erfindungsgemäß vorgesehen, dass die Breite 12 einer jeweiligen Längsauskehlung 7 kleiner ist als die Breite 13 einer jeweiligen Längswölbung 11. In dem dargestellten Ausführungsbeispiel sind ferner die Längsauskehlungen 7 und die Längswölbungen 11 im Wesentlichen kreisbogenförmig ausgebildet, wobei alternativ jede erdenkliche Formgebung möglich ist. Beispielsweise könnten die Längsauskehlungen 7 als V-förmige Ausnehmungen oder ellipsenförmig ausgebildet sein, wohingegen die Längswölbungen 11 ballig gerundet nach außen vorstehen. Es sind somit auch unterschiedliche Formen der Längsauskehlungen 7 und der Längswölbungen 11 möglich, so dass beide keine identische Grundform aufweisen müssen. Neben der Form der Längsauskehlungen 7 und Längswölbungen 11 ist entsprechend der in dem Ausführungsbeispiel dargestellten, im Wesentlichen kreisbogenförmigen Gestalt erfindungswesentlich, dass der Radius 14 einer jeweiligen Längswölbung 11 größer ist als der Radius 15 einer jeweiligen Längsauskehlung 7. Ferner kann der Radius 14 einer jeweiligen Längswölbung 11 größer als die Breite 16 eines jeweiligen Seitenwandabschnitts 8 sein.

Aufgrund dieser Ausgestaltung der Eckenabschnitte 9 ist der Bereich um eine jeweilige Längsauskehlung 7 mit einer im Vergleich zu den Seitenwandabschnitten 8 dickeren Schicht 2 aus Fasermaterial ausgebildet. Folglich sind die Fasern der Schicht 2 aus Fasermaterial in diesem Bereich bzw. in den Eckenabschnitten 9 gleich stark oder weniger stark verdichtet bzw. verpresst als die Fasern der Schicht 2 aus Fasermaterial in den Seitenwandabschnitten 8, wobei zumindest Bereiche der Seitenwandabschnitte 8 durch starke Verdichtung der Fasern der Schicht 2 aus Fasermaterial formstabil ausgebildet sind. Im Gegensatz zu diesen formstabilen Bereichen sind die Eckenabschnitte 9 im Wesentlichen elastisch ausgebildet, so dass eine Verformung der Eckenabschnitte 9 zu keiner Schädigung der Fasern der Schicht 2 aus Fasermaterial führt und die Fasern bei Verformung eines Eckenabschnitts 9 nicht gebrochen werden.

Sowohl die Längsauskehlungen 7 als auch die korrespondierend gegenüberliegend zu den Längsauskehlungen 7 angeordneten und ausgebildeten Längswölbungen 11 sind in der Schicht 2 aus Fasermaterial ausgeformt, was beispielsweise durch eine entsprechende Formgebung bei Verpressung bzw. Verdichtung der Schicht 2 aus Fasermaterial im Rahmen des Herstellungsprozesses erfolgen kann. Nachdem dann die Schicht 2 aus Fasermaterial mit ihren Längsauskehlungen 7 und Längswölbungen 11 hergestellt ist, wird dann innenseitig die Dichtschicht 4 und gegebenenfalls außenseitig die optionale Außenschicht 6 aus Vliesmaterial an der Schicht 2 aus Fasermaterial angebracht bzw. auf diese aufgebracht. Nach diesen Herstellungsschritten liegt das Leitungsbauteil 1, wie in Figur 3 dargestellt, als plattenförmig ausgebildetes Rohteil vor.

Zur Herstellung einer in sich geschlossenen Mantelfläche und somit zur Bildung eines nicht-metallischen Fluidleitungskanals wird das Leitungsbauteil 1 im Bereich der elastisch ausgebildeten Eckenabschnitte 9 gebogen. Die Figuren 5 bis 7 zeigen einzelne Zustände beim Biegevorgang für einen aus Figur 3 ersichtlichen Ausschnitt B, der einen Eckenabschnitt 9 und dessen angrenzende Seitenwandabschnitte 8 dargestellt. Das in dem Ausführungsbeispiel dargestellte Leitungsbauteil 1 weist insgesamt vier Längsauskehlungen 7 und vier Längswölbungen 11 auf, die das Leitungsbauteil 1 in vier Seitenwandabschnitte 8 unterteilen. Durch Biegung des Leitungsbauteils 1 in den Eckenabschnitten 9 bzw. durch Verformung der Eckenabschnitte 9 wird eine in sich geschlossene Mantelfläche hergestellt, so dass das Leitungsbauteil 1 die Form eines im Querschnitt viereckigen Fluidleitungskanals annimmt. Denkbar sind selbstverständlich Abwandlungen mit weniger oder mehr als vier Eckabschnitten 9, so dass im Rahmen der Erfindung jede im Querschnitt polygonale Gestalt eines Fluidleitungskanals denkbar und herstellbar ist.

Ausgehend von der in Figur 4 dargestellten Form des Eckenabschnitts 9 führt die Biegung bzw. Verformung des Eckenabschnitts 9 dazu, dass einer der beiden dargestellten Seitenwandabschnitte 8 unter einem Winkel von etwa 30° zu dem anderen Seitenwandabschnitt 8 abgewinkelt angeordnet ist. In den Figuren 6 und 7 nimmt die Verformung des Eckenabschnitts 9 bzw. die Biegung der beiden Seitenwandabschnitte 8 zu, wobei der Winkel in Figur 6 in etwa 60° beträgt, unter dem der eine Seitenwandabschnitt 8 zu dem anderen Seitenwandabschnitt 8 abgewinkelt ist. In Figur 7 ist schließlich die Endposition der beiden angrenzenden Seitenwandabschnitte 8 dargestellt. Bei dem im Querschnitt viereckigen Fluidleitungsbauteil sind in Endposition folglich die beiden Seitenwandabschnitte 8 unter einem Winkel von 90° zueinander angeordnet, wobei der in Figur 7 gezeigte Zustand des gebogenen Leitungsbauteils 1 dem in Figur 1 dargestellten Ausschnitt C entspricht. Diese Biegeschritte für die Seitenwandabschnitte 8 bzw. diese Verformungsschritte für die Eckenabschnitte 9 werden an jedem der vier Eckenabschnitte 9 durchgeführt, so dass das Leitungsbauteil 1 danach eine im Querschnitt viereckige Gestalt aufweist. Zum Schluss werden die Längskanten 17 und 18 des Leitungsbauteils 1 zusammengefügt, was beispielsweise durch An- und Einpressen oder Kleben der Längskanten 17 und 18 erfolgen kann. In dem dargestellten Ausführungsbeispiel sind die Längskanten 17 und 18 mittig im Bereich eines jeweiligen Seitenwandabschnitts 8 definiert. Denkbar ist aber auch, dass die jeweiligen Längskanten in einem Eckenabschnitt 9 definiert sind und in diesem Bereich die Längskanten zusammengefügt werden.

Um die Verluste in den innenseitigen Eckenbereichen des wie vorstehend zu einem Fluidleitungskanal geformten und gebogenen Leitungsbauteils 1 möglichst gering zu halten, sollte kein die Strömung beeinflussendes Material in diesem Bereich vorhanden sein. Normalerweise würde nach Herstellung der in sich geschlossenen Mantelfläche das die Längsauskehlungen 7 überdeckende Material der Dichtschicht 4 überschüssig werden. Dadurch würde ein Teil des Materials der Dichtschicht 4 im Inneren des gebildeten Fluidleitungskanals angeordnet sein und die Strömung nachteilig beeinflussen. Um dies zu vermeiden ist erfindungsgemäß vorgesehen, dass das überschüssige Material der Dichtschicht 4 nicht im Innern des gebildeten und in sich geschlossenen Fluidleitungskanals angeordnet ist, sondern beim Biege- bzw. Verformungsvorgang in die Hohlräume 10 der Längsauskehlungen 7 gelangt. Wie bereits in Figur 5 angedeutet ist, legt sich der die Längsauskehlung 7 überdeckende Teil der Dichtschicht 4 bei Biegung des Eckenabschnitts 9 und der angrenzenden Seitenwandabschnitte 8 in den Hohlraum 10, wobei mit Zunahme der Verformung des Eckenabschnitts 9 die Größe des Hohlraums 10 abnimmt und sich die Querschnittsform der Längsauskehlung 7 von im Wesentlichen kreisförmig zu zunächst elliptisch ändert. Mit weiterer Zunahme der Biegung der Seitenwandabschnitte 8 bzw. mit weiterer Verformung des Eckenabschnitts 9 wird der die Längsauskehlung 7 überdeckende Abschnitt der Dichtschicht 4, der sich in die Längsauskehlung 7 gelegt hat, von den sich gegenüberliegenden Bereichen der Innenwand 19 der Längsauskehlung 7 eingeklemmt, da Bereiche der Innenwand 19 im Wesentlichen flächig an sich selbst anliegen und nur durch die Dichtschicht 4 voneinander getrennt sind, wie in Figur 6 und 7 zu erkennen ist. Wie insbesondere aus Figur 7 hervorgeht, wird von einem Teil der an sich selbst anliegenden Innenwand 19 eine rechtwinklige Innenkante 20 definiert.

Die Besonderheit der erfindungsgemäß ballig ausgebildeten Eckenabschnitte 9 ist darin zu sehen, dass die Kraftübertragung von benachbarten Seitenwandabschnitten 8 innenseitig über die Kontaktflächen der an sich selbst anliegenden Innenwand 19 einer jeweiligen Längsauskehlung 7 und außenseitig über die elastischen Eigenschaften der Außenschicht 6 aus Vliesmaterial erfolgt, wobei demgegenüber bei flachliegendem und nicht gebogenem Leitungsbauteil 1 entsprechend der Darstellung in den Figuren 3 und 4 der Extremwert der Dehnung für die Dichtschicht 4 vorliegt.

In Figur 8 ist eine Möglichkeit zum raumsparenden Transport des erfindungsgemäßen Leitungsbauteils 1 nach Herstellung einer in sich geschlossenen Mantelfläche dargestellt. Die Längskanten 17 und 18 werden bereits nach der Herstellung des Leitungsbauteil 1 zusammengefügt, bevor das Leitungsbauteil 1 zu seinem Einbauort transportiert wird. Damit das an seinen Längskanten 17 und 18 zusammengefügte Leitungsbauteil 1 platzsparend transportiert werden kann, werden in dem in den Figuren 1 und 2 gezeigten Zustand, in welchem das Leitungsbauteil 1 einen viereckigen Querschnitt aufweist, zwei sich gegenüberliegende Eckenabschnitte 9 verformt, wobei die Verformung in umgekehrter Reihenfolge im Vergleich zur Herstellung einer in sich geschlossenen Mantelfläche erfolgt. Bei dieser Verformung werden zwei sich diagonal gegenüberliegende Eckenabschnitte 9 aufeinander zu bewegt, bis die Seitenwandabschnitte 8 aufeinander aufliegen bzw. bis zwei Seitenwandabschnitte 8 auf den zwei anderen Seitenwandabschnitten 8 aufliegen, wie in Figur 8 dargestellt ist. In dieser Transportstellung des Leitungsbauteils 1 weisen die in der Darstellung mittig angeordneten zwei Eckenabschnitte 9 ihre in Figur 4 gezeigte und unverformte Grundform auf, wohingegen die beiden außenliegend angeordneten Eckenabschnitte 9 derart verformt sind, dass die beiden angrenzenden Seitenwandabschnitte 8 über den Eckenabschnitt 9 bogen zueinander in einem Winkel von etwa 180° angeordnet sind. Um das so zusammengelegte Leitungsbauteil 1 in Position zu halten, muss eine Fixierhilfe vorgesehen sein, die die Seitenwandabschnitte 8 aufeinanderliegend zusammengedrückt hält, da die außenliegenden Eckenabschnitte 9 unter Spannung stehen und ohne Fixierhilfe dafür sorgen würden, dass das Leitungsbauteil 1 in seine viereckige Querschnittsform zurückgelangt.

Alternativ kann das Leitungsbauteil 1 natürlich auch vor Herstellung einer in sich geschlossenen Mantelfläche auf raumsparende Weise transportiert werden, indem mehrere plattenförmig ausgebildete Leitungsbauteile 1 gemäß dem in Figur 3 dargestellten Zustand platzsparend übereinander gestapelt werden.

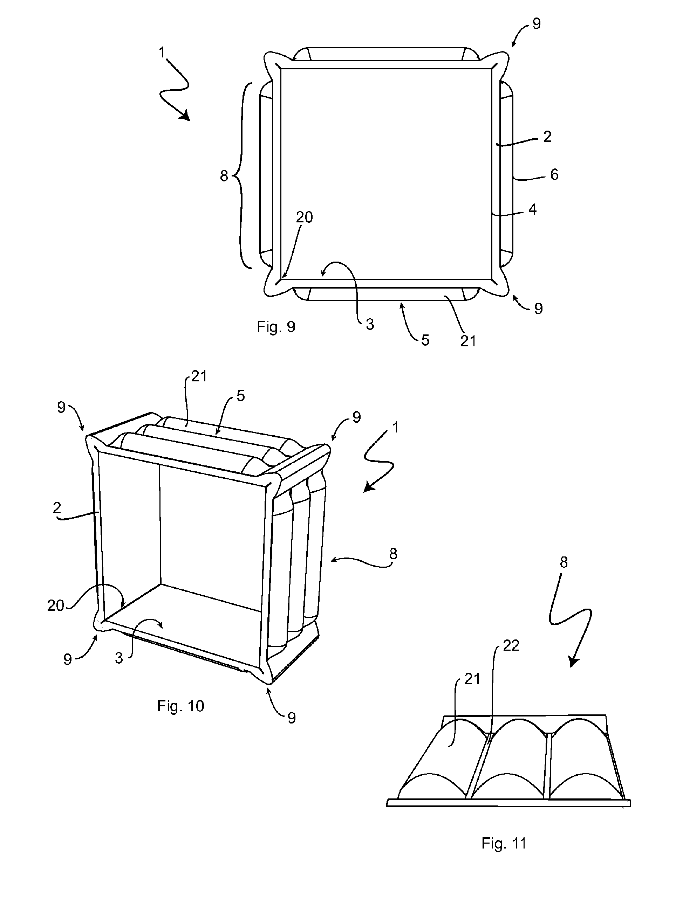

Das in den Figuren 9 bis 11 dargestellte Leitungsbauteil 1 unterscheidet sich von dem in den Figuren 1 bis 8 gezeigten Leitungsbauteil 1 lediglich durch die Ausgestaltung der Seitenwandabschnitte. Der schichtartige Aufbau aus einer Schicht 2 aus Fasermaterial, einer Dichtschicht 4 und einer optionalen Außenschicht 6 aus Vliesmaterial und die erfindungsgemäße Ausbildung der Eckenabschnitte 9 ist unverändert und identisch zu dem in den Figuren 1 bis 8 beschriebenen Leitungsbauteil 1, so dass auf die zu diesen Figuren erfolgte Beschreibung verwiesen wird. Unterschiede bestehen lediglich in der Ausgestaltung der Schicht 2 aus Fasermaterial im Bereich der Seitenwandabschnitte 8. Während die Seitenwandabschnitte 8 in den Figuren 1 bis 8 plattenförmig und eben ausgebildet sind, weist in den Figuren 9 bis 11 die Schicht 2 aus Fasermaterial in den Bereichen der Seitenwandabschnitte 8 außenseitig querverlaufende, nach außen gewölbte und ballig ausgebildete Biegeabschnitte 21 auf. In den Bereichen der Biegeabschnitte 21 sind die Fasern der Schicht 2 aus Fasermaterial geringer stark verdichtet bzw. verpresst als in den zwischen den Biegeabschnitten 21 ausgebildeten Zwischenabschnitten 22, wobei die Zwischenabschnitte 22 in Bezug auf ihre Wandstärke im Wesentlichen den in den Figuren 1 bis 8 gezeigten Seitenwandabschnitten 8 entsprechen. Aufgrund der balligen Ausbildung der Biegeabschnitte 21 weisen diese eine größere Wandstärke, jedoch eine geringere Faserverdichtung auf. Infolge der geringen Materialverdichtung im Bereich der Biegeabschnitte 21 und der sich in Längsrichtung des Leitungsbauteils abwechselnden Biegeabschnitte 21 und Zwischenabschnitte 22 ist es möglich, dass das in den Figuren 9 bis 11 dargestellte Leitungsbauteil 1 zum Transport sowohl auf die in Figur 8 gezeigte Weise raumsparend zusammenlegbar als auch nun zusätzlich in Längsrichtung aufrollbar ist. Aufgrund der geringen Materialverdichtung in den Biegeabschnitten 21 werden die Fasern der Schicht 2 aus Fasermaterial beim Aufrollen nicht geschädigt oder gebrochen, was zu den einleitend beschriebenen Nachteilen hinsichtlich der Stabilität eines Fluidleitungskanals führen würde.

Insgesamt zeichnet sich die vorstehend beschriebene Erfindung dadurch aus, dass der Grad der Materialverdichtung in den Eckenabschnitten 9 gleich oder geringer ist als in den Seitenwandabschnitten 8. Dadurch wird eine faserschonende Umlegung der Seitenwandabschnitte 8 ermöglicht, ohne dass dabei eine Schädigung der Fasern der Schicht 2 aus Fasermaterial eintritt. Dies kommt dem Leitungsbauteil 1 insbesondere beim erstmaligen Zusammenlegen zu einem Fluidleitungskanal und später beim Errichten des Fluidleitungskanals zugute, da der Faserverbund der Schicht 2 aus Fasermaterial eine Eigenrückstellung aufweist. Die Längsauskehlungen 7 stellen hierbei ein Verdrängungsvolumen dar, in das überschüssiges Material, beispielsweise Fasermaterial und/oder Material der Dichtschicht, beim Errichten des Kanals ohne Beschädigung ausweichen kann. Über die Außenschicht 6 aus Vliesmaterial wird je nach ihrer Dehnfähigkeit eine Rückstellwirkung bzw. mechanische Formstabilität erzielt.

Erfindungsgemäß ist das vorstehend beschriebene Leitungsbauteil 1 nach Herstellung einer in sich geschlossenen Mantelfläche in Form eines Kanal- oder Rohrabschnitts ausgebildet, wobei mehrere Leitungsbauteile 1 zum Aufbau von Lüftungsleitungen zusammengefügt werden können. Die Materialbeschaffenheit des Leitungsbauteils 1 ermöglicht es zum Beispiel, mit einem Schneidwerkzeug nachträglich die Einbaulänge des Leitungsbauteils 1 anzupassen oder sogar Öffnungen für Kanalabzweigungen einzuschneiden. Die vorstehend genannten vorteilhaften Eigenschaften machen die erfindungsgemäßen Leitungsbauteile 1 nicht nur zur Verwendung für Lüftungsrohre oder -kanäle geeignet, sondern ebenfalls zur Herstellung von Abgaskaminen und Abgasschächten.

Die vorstehend beschriebene Erfindung ist selbstverständlich nicht auf die beschriebenen und dargestellten Ausführungsformen beschränkt. An den in der Zeichnung dargestellten Ausführungsformen können zahlreiche, dem Fachmann entsprechend der beabsichtigten Anwendung naheliegende Abänderungen vorgenommen werden, ohne dass dadurch der Bereich der Erfindung verlassen wird. Dabei gehört zur Erfindung alles dasjenige, was in der Beschreibung enthalten und/oder in der Zeichnung dargestellt ist, einschließlich dessen, was abweichend von dem konkreten Ausführungsbeispielen für den Fachmann naheliegt.

## Patentansprüche

1. Leitungsbauteil (1), das plattenförmig ausgebildet ist und eine Schicht (2) aus einem verdichteten, wärmeisolierenden sowie feuerbeständigen Fasermaterial aufweist, auf deren Innenseite (3) eine fluidundurchlässige Dichtschicht (4) aufgebracht ist,
wobei eine Biegung des Leitungsbauteils (1) ermöglichende Längsauskehlungen (7) in der Schicht (2) aus Fasermaterial ausgeformt sind, die das Leitungsbauteil (1) in Seitenwandabschnitte (8) unterteilen und jeweilige Eckenabschnitte (9) definieren,
und wobei das Leitungsbauteil (1) zum Transport in raumsparender Weise zusammenlegbar und/oder aufrollbar ist,
**dadurch gekennzeichnet,**
**dass** die Längsauskehlungen (7) auf der Innenseite (3) der Schicht (2) aus Fasermaterial ausgebildet sind und dass die Schicht (2) aus Fasermaterial auf ihrer Außenseite (5) zu den jeweiligen Längsauskehlungen (7) korrespondierend angeordnete und nach außen ballig ausgebildete Längswölbungen (11) aufweist, die Teil der jeweiligen Eckenabschnitte (9) sind.

2. Leitungsbauteil (1) nach Anspruch 1, **dadurch gekennzeichnet, dass** die Breite (12) einer jeweiligen Längsauskehlung (7) kleiner ist als die Breite (13) einer jeweiligen, nach außen ballig ausgebildeten Längswölbung (11).

3. Leitungsbauteil (1) nach Anspruch 1 oder 2, **dadurch gekennzeichnet, dass** die Fasern der Schicht (2) aus Fasermaterial in den Eckenabschnitten (9) gleich stark oder geringer stark verdichtet sind als in den Seitenwandabschnitten (8).

4. Leitungsbauteil (1) nach einem der vorhergehenden Ansprüche, **dadurch gekennzeichnet, dass** zumindest Bereiche der Seitenwandabschnitte (8) durch starke Verdichtung der Fasern der Schicht (2) aus Fasermaterial formstabil ausgebildet sind.

5. Leitungsbauteil (1) nach einem der vorhergehenden Ansprüche, **dadurch gekennzeichnet, dass** die Längsauskehlungen (7) und die ballig ausgebildeten Längswölbungen (11) jeweils im Querschnitt ellipsenförmig oder kreisbogenförmig ausgebildet sind.

6. Leitungsbauteil (1) nach Anspruch 5, **dadurch gekennzeichnet, dass** der Radius (14) einer im Querschnitt ellipsenförmig oder kreisbogenförmig ausgebildeten Längswölbung (11) größer ist als der Radius (15) einer im Querschnitt ellipsenförmig oder kreisbogenförmig ausgebildeten Längsauskehlung (7).

7. Leitungsbauteil (1) nach Anspruch 6, **dadurch gekennzeichnet, dass** der Radius (14) einer im Querschnitt ellipsenförmig oder kreisbogenförmig ausgebildeten Längswölbung (11) größer ist als die Breite (16) eines Seitenwandabschnitts (8).

8. Leitungsbauteil (1) nach einem der vorhergehenden Ansprüche, **dadurch gekennzeichnet, dass** eine Schicht (6) aus einem elastischen Vliesmaterial vorgesehen ist, die an der Außenseite (5) des plattenförmig ausgebildeten Leitungsbauteils (1) auf der Schicht (2) aus Fasermaterial aufgebracht ist.

9. Leitungsbauteil (1) nach einem der vorhergehenden Ansprüche, **dadurch gekennzeichnet, dass** die innenseitige Dichtschicht (4) die Längsauskehlungen (7) derart überdeckt, dass zwischen der Dichtschicht (4) und den jeweiligen Längsauskehlungen (7) jeweilige längsverlaufende Hohlräume (10) gebildet sind.

10. Leitungsbauteil (1) nach einem der vorhergehenden Ansprüche, **dadurch gekennzeichnet, dass** zur Herstellung einer in sich geschlossenen Mantelfläche das Leitungsbauteil (1) mit seinen Längskanten (17, 18) aneinanderstoßend zu einem gewünschten polygonalen Mantelquerschnitt gebogen ist und die Längskanten (17, 18) zusammenfügbar sind.

11. Leitungsbauteil (1) nach Anspruch 10, **dadurch gekennzeichnet, dass** bei geschlossener Mantelfläche die Innenwand (19) einer jeweiligen Längsauskehlung (7) flächig an sich selbst anliegt und der die jeweilige Längsauskehlung (7) überdeckende Abschnitt der fluidundurchlässigen Dichtschicht (4) zwischen der an sich selbst anliegenden Innenwand (19) angeordnet und eingeklemmt ist.

12. Leitungsbauteil (1) nach einem der vorhergehenden Ansprüche, **dadurch gekennzeichnet, dass** zumindest ein Seitenwandabschnitt (8) der Schicht (2) aus Fasermaterial außenseitig querverlaufende, ballig ausgebildete und nach außen gewölbte Biegeabschnitte (21) mit geringer Materialverdichtung aufweist.
